# EUROPÄISCHE PATENTSCHRIFT

(11) **EP 0 519 148 B1**
(45) Veröffentlichungstag und Bekanntmachung des Hinweises auf die Patenterteilung: **01.04.1998**
(21) Anmeldenummer: 91811004.0
(22) Anmeldetag: 31.12.1991
(51) Int. Cl.: B01D 25/28

(54) **Verfahren zur Reduktion des Ölgehalts des bei einem Plattenfilter anfallenden Filterkuchens**
Method for the reduction of the oil content of a filter cake deriving from a plate filter
Procédé de réduction du contenu huileux de gâteau de filtre provenant d'un filtre de plaques

(30) Priorität: 10.04.1991 CH 1061/91
(43) Veröffentlichungstag der Anmeldung: 23.12.1992
(73) Patentinhaber: Inframetal Establishment, 9492 Eschen (LI)
(72) Erfinder: Hudson, John H., Monaco (MC)
(74) Vertreter: Riederer, Conrad A., Dr.

(56) Entgegenhaltungen:
- CH-A- 145 968
- GB-A- 488 280
- US-A- 1 693 417

## Beschreibung

Die Erfindung betrifft ein Verfahren zur Reduktion des Oelgehalts des bei einem Plattenfilter anfallenden Filterkuchens.

Die US Patente 3 608 734, 4 869 834 und die europäischen Patentanmeldungen 0 032 829, 0 304 597 beschreiben einen Plattenfilter mit einem Plattenstapel, der eine Anzahl von voneinander separierbaren Platten aufweist. Zwischen je zwei Platten befindet sich ein Filterband, durch welches eine Einlasskammer auf der Unterseite der oberen Platte von einer Auslasskammer auf der Oberseite der darunter angeordneten Platte abgegrenzt wird. Die zu reinigende Flüssigkeit, z.B. Walzöl eines Aluminiumwalzwerkes mit einer Temperatur von 40 bis 70 Grad C, wird der Einlasskammer zugeführt, von wo dann die Flüssigkeit durch einen Abschnitt des Filterbandes hindurch in die Auslasskammer fliesst. Sämtliche Einlasskammern sind mit einem gemeinsamen Verteiler, und sämtliche Auslasskammern sind mit einem gemeinsamen Kollektor verbunden. Von diesem Kollektor fliesst die gereinigte Flüssigkeit zu einem Tank und steht dann zu neuem Einsatz bereit. Für jedes Filterband ist eine Filterband-Transportvorrichtung vorgesehen, um periodisch einen gebrauchten Filterbandabschnitt durch einen frischen Filterbandabschnitt zu ersetzen. Um dies zu ermöglichen, werden die Platten des Plattenstapels voneinander separiert. Dazu ist eine Vorrichtung vorgesehen, welche zusätzlich auch die Aufgabe besitzt, die Platten nach dem Transport des Filterbandes zusammenzupressen, damit sie einen neuen Filterbandabschnitt zwischen den Rändern der Einlasskammer und der Auslasskammer festklemmen. Durch das Festklemmen des Filterbandes wird eine Dichtung bewirkt. Eine umlaufende Nut in der Nähe des Plattenrandes fängt etwaige Leckflüssigkeit auf, die dann durch ein Vakuum abgesogen wird.

Wenn die verschmutzte Flüssigkeit einer Absorption oder Adsorption, z.B. mittels Kieselgur oder Bleicherde, unterzogen werden soll, so wird solches Filterhilfsmittel in körniger oder pulverförmiger Form der Flüssigkeit zugemischt und als Anschwemmschicht auf die im Plattenfilter befindlichen Filterbandabschnitte aufgetragen. Die Korngrösse des Absorptions- oder Adsorptionsmaterials und die Porengrösse des Filterbandes werden derart gewählt, dass das körnige oder pulverförmige Filterhilfsmittel auf den Filterbandabschnitten verbleibt. Die zu filtrierende Flüssigkeit wird im Betrieb des Plattenfilters durch die Anschwemmschichten und die Filterbandabschnitte gepresst und erfährt dabei die durch das Filterhilfsmittel und die Filterbandabschnitte beabsichtigte Reinigung.

Wenn das Filterhilfsmittel erschöpft ist und das Filterband durch die Aufnahme von Schmutzstoffen einen übermässig hohen Druck für das Durchpumpen der Flüssigkeit benötigt, so müssen die Anschwemmschicht und das Filterband ersetzt werden. Um dies zu ermöglichen, müssen die Einlasskammern und die Auslasskammern entleert werden. Dies geschieht in der Regel durch Druckluft, welche in die Einlasskammern eingeführt wird. Diese etwa Umgebungstemperatur aufweisende Druckluft presst die sich in der jeweiligen Einlasskammer befindliche Flüssigkeit durch die Anschwemmschicht und den Filterbandabschnitt hindurch in die Auslasskammer. Von dort kann die von der Druckluft getriebene Restflüssigkeit zum gemeinsamen Auslass und weiter zum Tank für gereinigte Flüssigkeit fliessen. Statt mit Druckluft kann der Plattenfilter aber auch durch Anlegen eines Unterdrucks an die Auslasskammern entleert werden. Bekannt ist zu diesem Zweck die Verwendung eines Injektors.

Nach der Entleerung der Restflüssigkeit aus dem Plattenfilter werden die Filterplatten zuerst voneinander separiert, worauf dann die Filterband-Transportvorrichtung betätigt wird. Dies hat zur Folge, dass die Filterbandabschnitte mit den schmutzigen Anschwemmschichten aus dem Plattenfilter hinaustransportiert und frische Filterbandabschnitte eingezogen werden, worauf dann die Platten wieder zusammengepresst werden, damit sie die neuen Filterbandabschnitte festklemmen.

Die schmutzige Anschwemmschicht, der sogenannte Filterkuchen, enthält nicht nur Schmutzstoffe, sondern besitzt in der Regel auch einen relativ hohen Flüssigkeitsgehalt. Bei der Reinigung von Walzöl für Aluminiumwalzwerke beträgt der Flüssigkeitsgehalt des mit Druckluft teilweise entölten Filterkuchens etwa 30 bis 50 Gewichtsprozent. Dieser Flüssigkeitsgehalt wurde bisher in Kauf genommen. Er stellt aber in zweierleier Hinsicht ein Problem dar. Einerseits entsteht dadurch ein Verlust von Flüssigkeit; andererseits schafft der Flüssigkeitsgehalt des Filterkuchens erhebliche Entsorgungsprobleme. So darf z.B. stark mineralölhaltiger Filterkuchen nicht in einer Deponie gelagert werden, sondern muss z.B. in einem Verbrennungsofen entsorgt werden, was mit erheblichen Kosten verbunden ist.

Die US 1,693,417 betrifft einen Filtrierprozess, bei welchem durch die Anwendung einer übersättigten Wasserdampfatmosphäre auf das zu filtrierende Material die Filtriergeschwindigkeit erhöht wird. Die höhere Filtriergeschwindigkeit ergibt sich einerseits durch den höheren Druck der applizierten Wasserdampfatmosphäre und andererseits durch die geringere Viskosität der erwärmten Flüssigkeit. Ein weiterer Effekt ist, dass durch den höheren Druck der überwiegende Teil der Mutterlauge aus dem Filterkuchen entfernt werden kann. Das Verfahren eignet sich besonders für das Entfernen von mit Wasserdampf flüchtigen Produkten. Mit überhitztem Wasserdampf kann der Filterkuchen fast frei von Wasser erhalten werden. Weiter lassen sich mit überhitztem Wasserdampf flüchtige Komponenten noch leichter entfernen.

Während der Filtration mit Wasserdampf kann der Filterkuchen mit einer weniger viskosen und leichter entfernbaren Flüssigkeit gewaschen werden, die schwer flüchtiges Material vom Filterkuchen löst oder auswäscht. Die Waschflüssigkeit kann sodann mit Wasserdampf wiedergewonnen werden. Gemäss der US 1,693,417 kann aber auch Wasser aus einem Filterkuchen entfernt werden, indem dieser mit einem organischen Lösungsmittel gewaschen wird. Im Falle von Produkten, welche sich mit Luft gerne versetzen, werden die Dämpfe - so wird vorgeschlagen - mit einem inerten Gas gemischt.

Die GB 488,280 beschreibt ein Verfahren zum Trocknen eines Filterkuchens, bei welchem das filtrierte Material zuerst durch Druckluft vorgetrocknet wird und anschliessend durch eine kombinierte Anwendung eines Heizmediums und von Vakuum weitergetrocknet wird. Falls gewünscht, kann das Trocknen durch heisses Gas oder Dampf, welcher durch das filtrierte Material geblasen wird, unterstützt werden. Die Filterpresse zum Durchführen des vorbeschriebenen Verfahrens zeichnet sich durch einen relativ komplizierten Aufbau aus. Die Filterpresse besteht aus abwechslungsweise übereinander angeordneten Filterplatten und Filterrahmen. Die einzelnen Filterplatten weisen Hohlräume auf, durch welche das Heizmedium beim Trocknen geschickt wird. Die Rahmen und Platten weisen ausserdem am äusseren Rand Kanäle auf, durch welche Pressluft und das Heizmedium (Wasserdampf) zu- und abgeführt werden können. Verschiedene Ein- und Auslässe verbinden die Kanäle mit den Filterkammern respektive den Hohlräumen. Durch die spezielle Konstruktion der Filterpresse kann Druckluft auf verschiedenen Wegen durch die Filterpresse geschickt werden. Gemäss der GB-A-488,280 kann die eingesetzte Druckluft entweder kalt oder heiss sein. Grundsätzlich erfolgt aber das Trocknen des Filterkuchens durch eine Kombination von Ausblasen des Filterkuchens mit heisser oder kalter Luft, Einsatz eines Heizmediums zum Erwärmen des Filterkuchens und gleichzeitigem Absaugen unter Vakuum. Die GB-A-488,280 gibt keine Hinweise darauf, dass das Trocknen des Filterkuchens lediglich durch die Anwendung eines Gases getrocknet werden könnte.

Das CH-A-145'968 offenbart eine Filterpresse bestehend aus Platten und Rahmen, bei welcher ein Heizelement freischwebend derart in den Filterrahmen eingebaut ist, dass zwischen diesem und und der Platte ein mehr oder weniger grosser Zwischenraum verbleibt. Die Heizelemente können mit Dampf, heissem Wasser, heissem Oel oder auch elektrisch beheizt werden. Zum Trocknen wird der Filterkuchen zuerst ausgeblasen und anschliessend die Heizelemente beheizt, wobei die Entfernung der entstehenden Dämpfe durch Einblasen von heissen Gasen oder Dämpfen durch den Ablaufkanal noch beschleunigt wird. Gemäss CH-A-145'968 ist die rasche Trocknung dadurch gewährleistet, dass das Heizelement in direkter Berührung mit dem zu trocknenden Gut steht.

Es ist daher Aufgabe der vorliegenden Erfindung, ein Verfahren zur Reduktion des Flüssigkeitsgehalts des bei einem Plattenfilter anfallenden Filterkuchens zu schaffen.

Erfindungsgemäss wird diese Aufgabe dadurch gelöst, dass der Filterkuchen noch vor dessen Entnahme innerhalb des Plattenfilters mit einem gasförmigen Fluidum behandelt wird, indem zuerst das Restöl durch Ausblasen unter Druck oder durch Absaugen entfernt wird und anschliessend zur Erhöhung der Extraktionswirkung das gasförmige Fluidum vor der Einleitung in den Plattenfilter auf eine erhöhte Temperatur von vorzugsweise 150 bis 300 °C gebracht wird. Die Wahl des Fluidums hängt dabei von verschiedenen Faktoren ab, z.B. von der Art der Flüssigkeit, die mit dem Plattenfilter gereinigt wurde, von der Art des Filterhilfsmittels, von der Art des Filterbandes, usw. Verschiedene Fluida können den Flüssigkeitsentzug auf unterschiedliche Weise fördern, z.B. durch Aenderung der Viskosität, durch Veränderung der Adsorptions oder Absorptionseigenschaften des Filterhilfsmittels, durch die Lösungswirkung, usw. Die physikalischen und/oder chemischen Vorgänge sind aber nicht in allen Fällen klar. Durch das Fluidum wird die im Filterkuchen enthaltene Flüssigkeit noch vor der Entfernung des Filterkuchens aus dem Plattenfilter reduziert. Die so wiedergewonnene Flüssigkeit kann in der Regel wieder verwendet werden. Je nach der Art der Flüssigkeit, die im Plattenfilter gereinigt wurde und der Art des Fluidums, welches zur Reduktion des Flüssigkeitsgehaltes des Filterkuchens verwendet wurde, hat der Filterkuchen, wenn er dem Plattenfilter entnommen wird, einen stark reduzierten und in gewissen Fällen sogar praktisch vollständig reduzierten Flüssigkeitsgehalt. Dadurch wird die Entsorgung des Filterkuchens entsprechend erleichtert.

Durch das heisse Gas von vorzugsweise 150 bis 300 °C wird der Filterkuchen aufgeheizt, so dass die darin enthaltene Flüssigkeit eine geringere Viskosität erhält und daher wesentlich leichter aus dem Filterkuchen ausfliesst. Mit Vorteil weist das verwendete Fluidum eine gute Absorptionskapazität für die zu entfernende Flüssigkeit auf. Das Fluidum ist vorteilhaft gasförmig. Dies ermöglicht es, die herausgelöste Flüssigkeit und das Fluidum ohne grossen Aufwand zu trennen.

Da erfindungsgemäss das Verfahren zur Reduktion des Flüssigkeitsgehalts im Plattenfilter selbst stattfindet, sind nur wenig zusätzliche Apparaturen notwendig. Dies erlaubt es, die Investitionskosten gering zu halten.

Vorzugsweise ist bei der Reduktion des Flüssigkeitsgehalts des Filterkuchens die Strömungsrichtung des Fluidums im Plattenfilter die gleiche wie bei der Filtrierung. Dies ermöglicht die Realisierung des Verfahrens ohne grossen apparativen Aufwand, weil dabei zur Flüssigkeitsreduktion im wesentlichen die gleichen Apparaturen wie für die Filtrierung verwendet werden können.

In gewissen Fällen kann als Fluidum erwärmte Druckluft zur Anwendung gelangen. Da Druckluft in den meisten industriellen Betrieben zur Verfügung steht, sind nur geringe Investitionen zur Durchführung des Verfahrens notwendig. Mit grossem Vorteil wird aber als Fluidum ein Gas wie Stickstoff oder Kohlendioxid, verwendet. Dadurch kann eine Explosionsgefahr vermieden werden, insbesonders, wenn mit erhöhter Temperatur gearbeitet wird. Die Verwendung von Stickstoff, Kohlendioxid oder anderem inertem Gas ist insbesondere dann von Vorteil, wenn die Flüssigkeit, z.B. Walzöl, im Filterkuchen einen niedrigen Flammpunkt aufweist. Versuche haben gezeigt, dass Stickstoff sich sehr gut zum Herauslösen von Walzöl eignet. Es wird angenommen, dass Stickstoff eine gute Absorptionsfähigkeit für Walzöl aufweist. Es ist aber durchaus denkbar, dass dies auch für andere Gase zutrifft. Die Wahl des verwendeten Gases hängt dabei nicht nur von diesen Eigenschaften, sondern auch von der Leichtigkeit von dessen Beschaffung und dessen Kosten am Standort des Plattenfilters ab, wo es zum Einsatz gelangt.

Statt das Fluidum durch Anwendung von Druck durch den Plattenfilter zu fördern, kann es auch durch Anlegen eines Unterdrucks an den Ausgang des Plattenfilters gefördert werden. Die Erzeugung des Unterdrucks kann z.B. durch einen Injektor erfolgen. Da Injektoren relativ einfache Vorrichtungen darstellen, können die Investitionskosten niedrig gehalten werden. Dies gilt vor allem dann, wenn keine Druckluft zur Verfügung steht und die Auslagen für eine Kompressoranlage vermieden werden können.

Wird das Fluidum, z.B. Stickstoff, als Verbrauchsmaterial betrachtet und nicht durch Kreislauf einer Wiederverwertung zugeführt, so können die Investionskosten für den apparativen Aufwand, der notwendig ist, um das Verfahren durchzuführen, sehr niedrig gehalten werden.

Es ist aber auch möglich, das Fluidum im Kreislauf zu führen. Dies hat den Vorteil, dass die Kosten für ein Fluidum, wie Stickstoff oder Kohlendioxid, klein gehalten werden können.

Eine Vorrichtung zur Durchführung des Verfahrens ist dadurch gekennzeichnet, dass über ein Ventil und eine Leitung die Einlässe zu den Einlasskammern an eine Fluidumquelle anschliessbar sind und dass die Einlasskammern über eine Leitung und ein Ventil an eine Fluidumquelle anschliessbar sind und dass die Leitung mit einem Fluidumerhitzer in Verbindung steht. Dies ermöglicht die Durchführung des Verfahrens mit geringem apparativem Aufwand.

Es ist möglich, eine Kreislaufleitung über Ventile von den Auslasskammern zu den Einlasskammern herzustellen. Durch die Kreislaufführung kann der Verbrauch an Fluidum klein gehalten werden.

Wenn z.B. ein inertes Gas als Fluidum verwendet wird, kann ein Vorratsbehälter, z.B. ein Druckbehälter, vorgesehen sein, um nach Bedarf Fluidum in das Verfahren einzuführen.

Zur Aufrechterhaltung des Kreislaufs kann eine Fluidumpumpe vorgesehen sein.

In gewissen Fällen ist es zweckmässig, einen Flüssigkeits/Gas-Separator vorzusehen.

Ein Ausführungsbeispiel der Erfindung wird nun unter Bezugnahme auf die Zeichnung beschrieben. Es zeigt:
- Figur 1: eine schematische Darstellung der Vorrichtung zur Durchführung des Verfahrens und
- Figur 2: eine schematische Darstellung eines Plattenfilters.

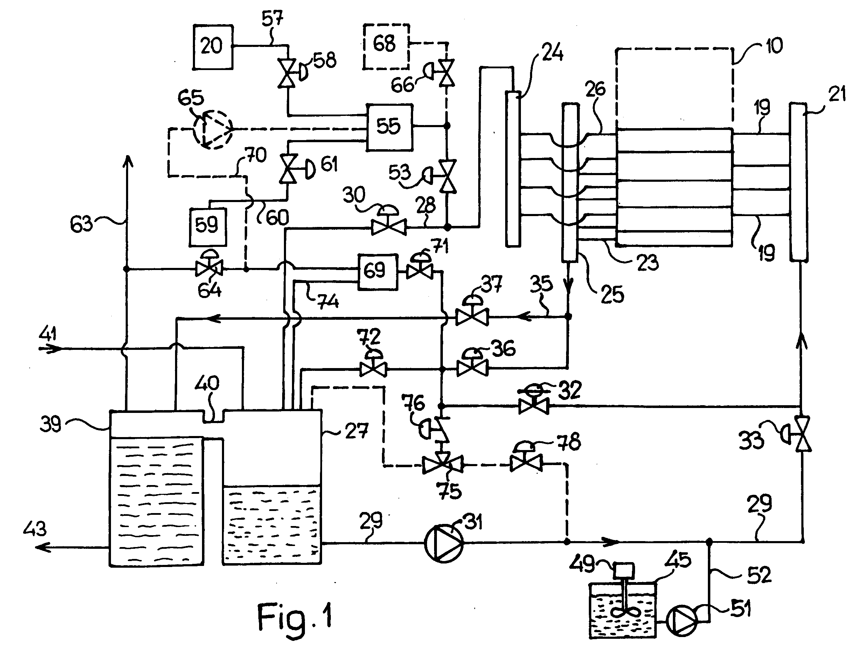

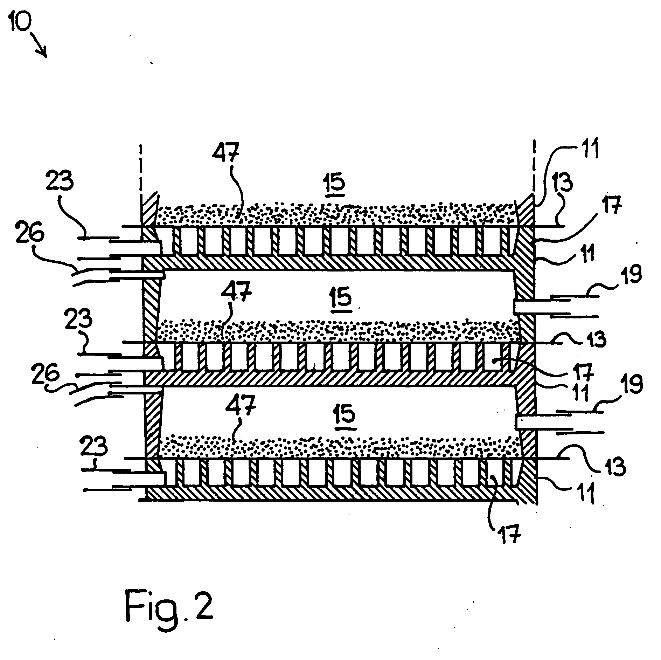

In den Figuren 1 und 2 ist schematisch ein Plattenfilter 10 dargestellt. Wie Figur 2 zeigt, besitzt der Plattenfilter 10 einen Plattenstapel mit einer Anzahl von voneinander separierbaren Platten 11. Zwischen je zwei Platten befindet sich ein Filterbandabschnitt 13. Ueber dem jeweiligen Filterbandabschnitt 13 ist die Einlasskammer 15. Die Auslasskammer 17 befindet sich unterhalb des Filterbandes 13. Sämtliche Einlasskammern 15 sind über Schläuche 19 an einem Verteiler 21 (Fig. 1) angeschlossen. Sämtliche Auslasskammern 17 sind über Schläuche 23 an einen Kollektor 25 angeschlossen. Wie später noch näher beschrieben wird, kann zur Entleerung des Plattenfilters 10 von einer Druckluftquelle 20 über die Leitung 57, die Ventile 58, 53, einen Verteiler 24 und Schläuche 26 den Einlasskammern 15 Druckluft zugeführt werden, wobei die Flüssigkeit aus den Auslasskammern 17 (Fig. 2), die Schläuche 23, den Kollektor 25 und die Ventile 36, 72 in den Tank 27 fliessen kann.

Vom Tank 27 für die zu filtrierende Flüssigkeit führt die Leitung 29 zur Pumpe 31 und von dort über das Ventil 33 zum Verteiler 21. Vom Kollektor 25 führt die Leitung 35 zum Ventil 37. Das Ventil 37 führt zum Tank 39 für die gereinigte Flüssigkeit. Tanks 39 und 27 sind mit einer Ueberlaufleitung 40 miteinander verbunden. Mit der Bezugsziffer 41 ist die Leitung vom Flüssigkeitsanwender, z.B. von einem Aluminiumwalzwerk, zum Tank 27 bezeichnet. Die Bezugsziffer 43 bezeichnet die Leitung vom Tank 39 zum Flüssigkeitsanwender.

Der Tank 45 enthält das pulverförmige oder körnige Filterhilfsmittel, welches zur Herstellung der Anschwemmschichten 47 (Fig. 2) auf dem Filterband 13 verwendet wird. Ein Rührwerk 49 dient der Durchmischung des pulverförmigen oder körnigen Filterhilfsmittels mit Flüssigkeit. Die so gebildete Suspension kann dann zur Bildung der Anschwemmschichten 47 mittels der Pumpe 51 über die Leitungen 52, 29 in den Plattenfilter 10 gepumpt werden.

Die bisherige Beschreibung der Figuren 1 und 2 entspricht im wesentlichen der Beschreibung einer bekannten Plattenfilteranlage, wie sie beispielsweise im US-Patent 3 608 734 oder der europäischen Patentanmeldung 0 132 829 dargestellt wurde. Für weitere Einzelheiten einer solchen Anlage kann daher auf diese Druckschriften verwiesen werden.

Zur Durchführung des Verfahrens zur Reduktion des Flüssigkeitsgehalts des Filterkuchens wird das Fluidum über das Ventil 53 dem Verteiler 24 zugeführt. Wie bereits einleitend beschrieben wurde, wird als Fluidum ein Gas verwendet, welches die Eigenschaft besitzt, den Flüssigkeitsgehalt des Filterkuchens zu verringern, beispielsweise durch Verminderung der Viskosität der Flüssigkeit. Wird somit ein Gas durch einen Fluidumerhitzer 55 auf 60 bis 300 Grad C aufgeheizt und über das Ventil 53 dem Plattenfilter 10 zugeführt, so bewirkt die Wärme ein Aufheizen der Filterkuchen. Die noch im Filterkuchen enthaltene Flüssigkeit verliert dann an Viskosität und wird somit leicht aus dem Filterkuchen ausgeschieden. Als Fluidum kann beispielsweise erhitzte Druckluft zur Anwendung gelangen. Es ist daher von der Druckluftquelle 20 eine Leitung 57 mit einem Ventil 58 zum Fluidumerhitzer 55 vorgesehen.

Werden mit dem Plattenfilter Flüssigkeiten mit niedrigem Flammpunkt behandelt, so wird aber als Fluidum zweckmässigerweise ein Gas, z.B. Stickstoff oder Kohlendioxid, vorgesehen. Es kann daher von einer Quelle 59 für Gas eine Leitung 60 mit einem Ventil 61 zum Fluidumerhitzer 55 vorgesehen sein. In Aluminiumwalzen, wo Plattenfilter Anwendung finden, steht oft Stickstoff als inertes Gas zur Verfügung.

Bei einem Versuch wurde während 30 Minuten Stickstoff mit einer Temperatur von 230 Grad C dem Plattenfilter eines Aluminiumwalzwerkes zugeführt. Nach der Entnahme aus dem Plattenfilter enthielt der Filterkuchen noch 0,1 Prozent Walzöl. Dieser Wert liegt wesentlich unter den in den meisten Ländern gültigen Grenzwerten. In der Regel wird ein Oelgehalt von 0,5 Prozent noch als zulässig betrachtet.

Die Flüssigkeitsreduktion hängt im wesentlichen von vier Faktoren ab, nämlich von der Gastemperatur, der Durchflussrate, der Zeit und der Art des verwendeten Gases.

In der Praxis kann je nach den Erfordernissen mit Temperaturen von 60 bis 300 Grad C, vorzugsweise 150 bis 250 Grad C, gearbeitet werden. Dabei ist mit einer Zeit von etwa 30 Minuten bis hinunter auf etwa 5 Minuten als Behandlungsdauer zu rechnen.

Das Verfahren kann durch entsprechende Wahl der Parameter optimiert werden. Auch ist es möglich, mit einer Temperaturkurve zu arbeiten. So kann beispielsweise die Temperatur gegen den Schluss der Behandlungsdauer abgesenkt werden, um den Filterkuchen und das Filterband vor der Entnahme aus dem Plattenfilter abzukühlen.

Der mit dem beschriebenen Verfahren gereinigte Filterkuchen kann leichter entsorgt oder in vielen Fällen auch mindestens zum Teil als Filterhilfsmittel wiederverwendet werden.

Um die Kosten für Gas gering zu halten, wäre es möglich, dieses im Kreislauf zu führen. Zu diesem Zweck kann z.B. eine Pumpe 65 vorgesehen werden. Der Kreislauf führt dann von den Auslasskammern 17 des Plattenfilters 10, die Schläuche 23, die Ventile 36, 71, den Separator 69, z.B. Gas/Flüssigkeit-Separator, die Leitung 70, die Pumpe 65, den Fluidumerhitzer 55, das Ventil 53, den Verteiler 24 und die Schläuche 26 zurück zu den Einlasskammern 15 des Plattenfilters 10.

Bevor eine Reduktion des Flüssigkeitsgehalts des Filterkuchens innerhalb des Plattenfilters vorgenommen werden kann, muss die in diesem nach der Filtrieroperation enthaltene Restflüssigkeit entfernt werden. Dies kann durch Ausblasen mit Druckluft oder durch Absaugen erfolgen. Zum Ausblasen kann Druckluft von einer Druckluftquelle 20 dienen, falls eine solche vorgesehen ist. Zum Absaugen wird ein Injektor 75 gezeigt, der über das Ventil 78 an den Ausgang der Pumpe 31 angeschlossen werden kann. Der Sauganschluss des Injektors 75 ist über die Ventile 76, 32, 36 und den Verteiler 21, bzw. Kollektor 25, an den Plattenfilter 10 anschliessbar, aus welchem dann durch die Injektorwirkung die Restflüssigkeit in den Tank 27 gefördert werden kann. Das Schliessen der Ventile 71, 72 verhindert das Ansaugen von Luft.

Bevor nun die Wirkungsweise der Anlage bei der Reduktion des Flüssigkeitsgehalts der Filterkuchen beschrieben wird, soll zuerst das Voranschwemmen, die Filtrieroperation und das Entleeren der Restflüssigkeit aus dem Plattenfilter beschrieben werden.

Das Voranschwemmen, d.h. der Beginn der Bildung der Anschwemmschicht aus Filterhilfsmittel, erfolgt nach dem Einziehen neuer Filterbandabschnitte 13 in den Plattenfilter 10. Die Ventile 33, 36, 72 sind offen. Die Ventile 37, 30 und 53 sind geschlossen. Die Pumpen 31 und 51 laufen. Die Pumpe 51 pumpt dabei die im Tank 45 enthaltene Suspension über die Leitung 29, das offene Ventil 33 und den Verteiler 21 in die Kammern 15 des Plattenfilters 10, wo sich die Suspension über die Filterbandabschnitte 13 verteilt. Die Flüssigkeit fliesst durch den jeweiligen Filterbandabschnitt 13 hindurch in die Auslasskammer 17 und von dort über den Schlauch 23, den Kollektor 25, und die Ventile 36, 72 in den Tank 27. Die zu Beginn im Plattenfilter 10 enthaltene Luft strömt aus den Einlasskammern 15 durch die Schläuche 26, den Kollektor 24, die Leitung 28 und das Ventil 30 in den Tank 27, worauf das Ventil 30 geschlossen wird. Die Entlüftung des Tanks 27 erfolgt über die Ueberlaufleitung 40, den Tank 39 und die Leitung 63.

Bei der Filtrieroperation sind die Ventile 30, 33 und 37 offen. Verunreinigte Flüssigkeit aus dem Tank 27 wird mittels der Pumpe 31 durch den Plattenfilter 10 gepumpt. Die gereinigte Flüssigkeit aus dem Plattenfilter 10 fliesst über die Leitung 35 und das geöffnete Ventil 37 in den Tank 39. Auch bei der Filtrieroperation wird durch die Pumpe 51, z.B. intermittierend, in dosierten Mengen Filterhilfsmittel gefördert.

Wenn das Absorptions- oder Adsorptionsmaterial erschöpft ist und/oder die in Betrieb stehenden Filterbandabschnitte wegen der erfolgten Aufnahme von Schmutzstoffen einen übermässig hohen Druck zum Durchpumpen der Flüssigkeit benötigen, wird die Filtrieroperation unterbrochen, um Anschwemmschichten und Filterbandabschnitte zu ersetzen. Zu diesem Zweck muss die im Plattenfilter 10 enthaltene Flüssigkeit abgelassen werden. Dies geschieht beispielsweise durch Ausblasen mit Druckluft aus der Druckluftquelle 20. Bei geöffneten Ventilen 58, 53 und nicht in Betrieb stehendem Fluiderhitzer 55 strömt Normaltemperatur aufweisende Druckluft mit einem Druck von vorzugsweise 4 bar oder höher durch den Verteiler 24 und die Schläuche 26 in die Einlasskammer 15 (Fig. 2) und presst die dort vorhandene Flüssigkeit durch die Anschwemmschichten 47 und die Filterbandabschnitte 13 hindurch in die Auslasskammern 17. Von dort fliesst die Flüssigkeit über die Schläuche 23 in den Kollektor 25 und von dort über die offenen Ventile 36, 72 in den Tank 27. Das Ventil 37 ist geschlossen, damit keine Flüssigkeit in den Tank 39 gelangt. Nach dem Abfliessen der in den Einlasskammern 15 des Plattenfilters enthaltene Flüssigkeit fliesst Druckluft durch die Anschwemmschichten 47 hindurch und reisst dabei einen Teil der durch Kapillarkräfte in den Poren festgehaltenen Flüssigkeit mit. Es hat sich aber gezeigt, dass auch bei langen Ausblaszeiten die Anschwemmschicht immer noch einen relativ hohen Flüssigkeitsgehalt aufweist. So wurde nach der Filtrierung von Walzöl für Aluminiumwalzwerke ein Gehalt von etwa 40 Prozent Restflüssigkeit in der Anschwemmschicht festgestellt. Solche Anschwemmschichten mit grossem Restflüssigkeitsgehalt, die sogenannten Filterkuchen, können angesichts der geltenden Umweltschutzvorschriften nicht in einer Deponie gelagert werden.

Eine andere Möglichkeit, die Restflüssigkeit abzuziehen, besteht in der Anwendung eines Unterdrucks. Wenn keine Druckluftquelle 20 zur Verfügung steht, kann deshalb ein Injektor 75 vorgesehen werden. Wenn somit die Pumpe 31 läuft, das Ventil 33 geschlossen und das Ventil 78 offen ist, erzeugt der Flüssigkeitskreislauf vom Tank 27 über die Pumpe 31 und den Injektor 75 zum Tank 27 einen Unterdruck, welcher bei geschlossenen Ventilen 71, 72 über die offenen Ventile 76, 36 und 32 die Restflüssigkeit aus dem Plattenfilter 10 absaugt. Die Restflüssigkeit gelangt über den Injektor 75 in den Tank 27.

Das erfindungsgemässe Verfahren zur Reduktion des Flüssigkeitsgehalts des bei einem Plattenfilter anfallenden Filterkuchens sieht nun vor, dass der Filterkuchen noch vor dessen Entnahme innerhalb des Plattenfilters 10 mit einem Fluidum durchströmt wird, welches den Flüssigkeitsentzug aus dem Filterkuchen verbessert. Als solches Fluidum kann beispielsweise heisse Druckluft verwendet werden. Zu diesem Zweck wird Druckluft aus der Druckluftquelle 20 über das Ventil 58, den eingeschalteten Fluidumerhitzer 55, das Ventil 53, den Verteiler 24 und die Schläuche 26 in den Plattenfilter 10 geführt. Die Wärme bewirkt ein Aufheizen des Filterkuchens, wodurch die noch verbleibende Flüssigkeit eine geringere Viskosität erhält und daher wesentlich besser aus dem Filterkuchen ausgetrieben wird. Zusammen mit der Luft strömt die ausgetriebene Flüssigkeit von den Auslasskammern 17 (Fig. 2) zum Kollektor 25 und von dort über die Ventile 36, 71 und Gas/Flüssigkeits-Separator und/oder Kühler 69 in den Tank 27. Die Entlüftung des Tanks 27 erfolgt über die Ueberlaufleitung 40, den Tank 39 und die Leitung 63. Die mögliche Arbeitstemperatur des Fluidums wird insbesondere durch drei Faktoren begrenzt, nämlich von der Art des verwendeten Fluidums, der Flüssigkeit, welche aus dem Filterkuchen abgeschieden werden soll, und dem Material der Schläuche 23, 26. Auf jeden Fall muss vermieden werden, dass eine Brand- oder Explosionsgefahr entsteht oder dass die Schläuche unter Temperatureinwirkung Schaden leiden.

Eine Brand- oder Explosionsgefahr kann auch bei relativ hohen Temperaturen vermieden werden, wenn statt Luft ein praktisch inertes Gas verwendet wird, z.B. Stickstoff oder Kohlendioxid.

Solche Gase stehen z.B. in Aluminiumwalzwerken für andere Zwecke zur Verfügung, so dass in der Regel keine grossen zusätzlichen Kosten für Installation und Lagerhaltung notwendig sind. Wie in Fig. 1 gezeigt, kann inertes Gas aus der Quelle 59 über das Ventil 61, den Fluidumerhitzer 55 und das Ventil 53 dem Plattenfilter 10 zugeführt werden. Es ist auch möglich, vor dem Einführen dieses Fluidums den Plattenfilter mit Druckluft zu entleeren.

Um den Verbrauch an Fluidum, z.B. inertem Gas, gering zu halten, ist es möglich, das Fluidum im Kreislauf zu führen. Zu diesem Zweck können einige Zeit nach der Oeffnung des Ventils 61, also wenn keine Luft mehr in der Anlage ist, das Ventil 64 geschlossen und die Pumpe 65 eingeschaltet werden.

## Patentansprüche

1. Verfahren zur Reduktion des Oelgehaltes des bei einem Plattenfilter (10) anfallenden Filterkuchens (47), dadurch gekennzeichnet, dass der Filterkuchen noch vor dessen Entnahme innerhalb des Plattenfilters mit einem gasförmigen Fluidum behandelt wird, indem zuerst das Restöl durch Ausblasen unter Druck oder durch Absaugen entfernt wird und anschliessend zur Erhöhung der Extraktionswirkung das gasförmige Fluidum vor der Einleitung in den Plattenfilter auf eine erhöhte Temperatur von vorzugsweise 150 bis 300 °C gebracht wird.

2. Verfahren nach Anspruch 1, dadurch gekennzeichnet, dass bei der Reduktion des Oelgehaltes des Filterkuchens die Strömungsrichtung des Fluidums im Plattenfilter die gleiche ist wie bei der Filtrierung.

3. Verfahren nach Anspruch 1 oder 2, dadurch gekennzeichnet, dass als Fluidum erwärmte Druckluft verwendet wird.

4. Verfahren nach einem der Ansprüche 1 bis 3, dadurch gekennzeichnet, dass als Fluidum ein inertes Gas, z.B. Stickstoff oder Kohlendioxid, zur Anwendung gelangt.

5. Verfahren nach einem der Ansprüche 1 bis 4, dadurch gekennzeichnet, dass das Fluidum durch Anlegen eines Unterdrucks an den Ausgang des Plattenfilters gefördert wird.

6. Verfahren nach einem der Ansprüche 1 bis 5, dadurch gekennzeichnet, dass das Fluidum im Kreislauf geführt wird.

7. Verfahren nach einem der Ansprüche 1 bis 6, dadurch gekennzeichnet, dass die Behandlung während etwa 5 bis etwa 30 Minuten durchgeführt wird.

8. Verwendung des Verfahrens nach einem der Ansprüche 1 bis 7 zur Reduktion des Oelgehalts des Filterkuchens bei einem Plattenfilter für die Reinigung von Walzöl.

## Claims

1. Process for the reduction of the content of oil of a filter cake (47) accumulating in a plate filter (10), characterised in that the filter cake is treated with a gaseous fluid within the plate filter before its removal, by first taking away the remaining oil by blowing with pressure or sucking, and subsequently for the elevation of the extraction effect the gaseous fluid is brought to a higher temperature of preferably 150 to 300° Celsius before the feeding into the plate filter.

2. Process according to claim 1, characterised in that the direction of flow is the same for the reduction of the content of oil as for the filtration.

3. Process according to claim 1 or 2, characterised in that heated air is used as fluid.

4. Process according to one of the claims 1 to 3, characterised in that a inert gas, e.g. nitrogen or carbon dioxide, is applied as fluid.

5. Process according to one of the claims 1 to 4, characterised in that the fluid is transported to the exit of the plate filter by application of a vacuum.

6. Process according to one of the claims 1 to 5, characterised in that the fluid is conducted in a circuit.

7. Process according to one of the claims 1 to 6, caracterised in that the treatment is carried out for about 5 to about 30 minutes.

8. Use of the process according to one of the claims 1 to 7 for the reduction of the content of oil of a filter cake in a plate filter for the cleaning of roll oil.

## Revendications

1. Procédé pour réduire la teneur en huile du gâteau de filtre (47) se formant sur un filtre à plaques (10), caractérisé en ce que le gâteau de filtre est traité, avant même d'être retiré du filtre à plaques, avec un fluide gazeux, par le fait que l'huile résiduelle est d'abord chassée par soufflage sous pression ou par aspiration et que pour augmenter ensuite l'effet d'extraction, le fluide gazeux est porté avant son introduction dans le filtre à plaques à une température élevée, de 150 à 300 °C de préférence.

2. Procédé selon la revendication 1, caractérisé en ce que lors de la réduction de la teneur en huile du gâteau de filtre, le sens de circulation du fluide dans le filtre à plaques est le même que lors du filtrage.

3. Procédé selon la revendication 1 ou 2, caractérisé en ce que le fluide utilisé est de l'air comprimé chauffé.

4. Procédé selon l'une quelconque des revendications 1 à 3, caractérisé en ce que le fluide utilisé est un gaz inerte, par exemple de l'azote ou du dioxyde de carbone.

5. Procédé selon l'une quelconque des revendications 1 à 4, caractérisé en ce que le fluide est amené à la sortie du filtre à plaques par application d'une dépression.

6. Procédé selon l'une quelconque des revendications 1 à 5, caractérisé en ce que le fluide est recyclé.

7. Procédé selon l'une quelconque des revendications 1 à 6, caractérisé en ce que le traitement est effectué pendant 5 à 30 minutes environ.

8. Utilisation du procédé selon l'une quelconque des revendications 1 à 7 pour la réduction de la teneur en huile du gâteau de filtre dans un filtre à plaques destiné à la purification d'huile de laminage.
